# EUROPEAN PATENT APPLICATION

(11) **EP 1 867 552 A1**
(43) Date of publication of application: **19.12.2007**
(21) Application number: 06731063.1
(22) Date of filing: 04.04.2006
(51) Int. Cl.: B62D 3/12

(54) **RACK-PINION STEERING GEAR**

(30) Priority: 04.04.2005 JP 2005107732
(71) Applicant: NSK Ltd., Tokyo 141-8560 (JP)
(72) Inventor: AMADA, Shinya c/o NSK STEERING SYSTEM Co., Ltd, Maebashi-shi, Gunna 371-8528 (JP)
(74) Representative: Schuster, Thomas
(86) International application number: PCT/JP2006/307115
(87) International publication number: WO 2006/107041

(57) **Abstract**

A rack and pinion steering gear 10 including a pinion shaft 11 coupled to a steering shaft, a rack shaft 12 which meshes with the pinion 11, and a rack guide 14 having provided thereon a metallic roller 16 adapted to roll on a back side of the rack shaft 12 and adapted to support the rack shaft 12 via the metallic roller 16, wherein the metallic roller 16 has an elastic member 32 which is partially secured to a rolling contact surface 29 thereof in a circumferential direction, whereby the metallic roller 16 is brought into contact with the back side of the rack shaft 12 at a metallic portion of the rolling contact surface 29 and the elastic member 32. By this configuration, the generation of abnormal noise can be suppressed, and the increase in driving stability of the vehicle can be realized.

## Description

### Technical Field

The present invention relates to a rack and pinion steering gear for use in a steering system of, for example, a vehicle such as a motor vehicle.

### Background Art

A rack and pinion steering gear is such as to include a pinion coupled to a steering shaft which rotates through manipulation of a steering wheel and a rack shaft which meshes with the pinion to move rectilinearly in an axial direction which intersects a rotational axis of the pinion, whereby road wheels are steered by virtue of the rectilinear motion of the rack shaft.

A detachment force acts between faces of teeth of the pinion and faces of teeth of the rack shaft at a meshing portion where the rack shaft meshes with the pinion by virtue of the manipulation of the steering wheel, whereby the rack shaft tends to be detached from the pinion to thereby generate a backlash at the meshing portion. However, the rack shaft is biased towards the pinion shaft by a rack guide which is provided on an opposite side to the pinion across the rack shaft, whereby the generation of backlash at the meshing portion is designed to be prevented.

In the rack and pinion steering gear like this, there are two types: a *sliding contact type* in which a rack guide and a rack shaft are brought into sliding contact with each other; and a *rolling contact type* in which a roller is interposed between a rack guide and a rack shaft.

As an example of a rack and pinion steering gear of rolling contact type, there is known a rack and pinion steering gear in which a rack guide is made up of a roller which rolls on a back side of a rack shaft and a roller housing which supports the roller in a rolling fashion, and a surface hardening treatment is applied to a rolling contact surface of the roller, a surface of a rotational shaft of the roller and an inner surface of a supporting side of the roller housing (refer to, for example, Patent Document No. 1). In addition, as another example of a rack and pinion steering gear, there is also known a rack and pinion steering gear in which a roller is coated with a resin material (refer to, for example, Patent Document No. 2).

Patent Document No. 1: Japanese Patent Unexamined Publication No. JP-A-2004-322716
Patent Document No. 2: Japanese Patent Unexamined Publication No.JP-A-2002-079946

### Disclosure of the Invention

### Problem that the Invention is to Solve

In the conventional rack and pinion steering gear of rolling contact type, it was general practice that the rack shaft, roller, rotational shaft of the roller and roller housing were made of metal due to functional convenience, and therefore, the contact between the constituent members was a metallic contact.

While the road wheels of a vehicle are caused to oscillate laterally by irregularities on the surface of a road when the vehicle is running, whereby the rack shaft minutely vibrates in an axial direction thereof, in the event that the contact between the rack shaft, roller, rotational shaft of the roller and roller housing is the metallic contact, it has been difficult for vibration energy of the rack shaft to be damped. Due to this, minute collisions are easy to be generated at the meshing portion between the pinion and the rack shaft, the contact portion between the rack shaft and the roller and parts on the periphery of the roller, leading to a case where abnormal noise such as rattling noise is generated.

In the rack and pinion steering gear disclosed in Patent Document No. 2 above, a metallic contact between the rack shaft and the roller is prevented by coating the roller with the resin material. In this case, however, all the loads including the detachment force which are applied from the rack shaft to the rack guide are borne by the resin material, which gives cause for concern about an early creep of the resin material.

In addition, in Patent Document No. 2, a configuration is disclosed in which a sliding contact portion with the rack shaft is provided on a rack guide base body so as to disperse the loads applied from the rack shaft to the rack guide to thereby assist the resin material to bear the loads. In the rack and pinion gear of rolling contact type, however, it is its original object to interpose the roller between the rack shaft and the rack guide to realize a rolling contact therebetween so as to realize a reduction in contact resistance and wear between the rack shaft and the rack guide, which, therefore, gives cause for concern that the object cannot be achieved by providing the sliding contact portion.

The invention was made in view of the situations that have been described above, and an object thereof is to provide a rack and pinion steering gear of rolling contact type which can suppress the generation of abnormal noise and realize an increase in driving stability of the vehicle.

### Means for Solving the Problem

With a view to achieving the object, according to the invention, there is provided a rack and pinion steering gear including a pinion shaft coupled to a steering shaft, a rack shaft which meshes with the pinion and a rack guide provided with a metallic roller adapted to roll on a back side of the rack shaft and the rack guide supporting the rack shaft via the metallic roller, wherein the metallic roller has an elastic member which is partially secured to a rolling contact surface thereof in a circumferential direction, and the metallic roller contacts with the back side of the rack shaft at a metallic portion of the rolling contact surface and the elastic member.

According to the configuration, the elastic member is disposed at a contact portion between the rack shaft to which highest vibration energy is applied and the metallic roller, so that the vibration energy of the rack shaft can be absorbed by the elastic member. By this configuration, the propagation of vibrations to the metallic roller and parts lying on the periphery thereof is suppressed, so as to reduce abnormal noise that would otherwise be caused by minute collisions at the meshing portion between the pinion and the rack shaft, the contact portion between the rack shaft and the metallic roller and the parts lying on the periphery of the metallic roller. As a result, a comfortable inside environment can be provided for occupants including the driver.

In addition, when the pinion rotates through manipulation of the steering wheel and the rack shaft starts its rectilinear motion in its axial direction, the rack shaft performs such a motion while pressing against the elastic member on the metallic roller, and the steering effort is also used to press the elastic member. Therefore, in a steering manipulation range in which the steering wheel is manipulated through a minute steering angle as from, for example, a straight ahead running state, a relation between the manipulation of the steering wheel and the movement of the road wheels does not rise linearly from 0 (zero) but rises in a quadratic curve-like fashion, whereby the movement of the road wheels relative to the manipulation of the steering wheel does not become too drastic, so that a fatigue-less driving stability can be obtained.

Furthermore, the loads including the detachment force at the meshing portion between the pinion and the rack shaft which are applied from the rack shaft to the rack guide can be borne by not only the elastic member of the roller but also the metallic portion on the rolling contact surface of the roller, whereby an early creep of the elastic member can be prevented, and the possibility of failure of the elastic member can be reduced even when an excessive load is inputted. As a result, the aforesaid effect can be enjoyed over a long period of time.

### Advantage of the Invention

According to the rack and pinion steering gear of the invention, not only the generation of abnormal noise can be suppressed but also an increase in driving stability can be realized.

### Brief Description of the Drawings

Fig. 1 is a sectional view showing an embodiment of a rack and pinion steering gear according to the invention;
Fig. 2 is an enlarged sectional view of a metallic roller in the rack and pinion steering gear shown in Fig. 1;
Fig. 3 is an enlarged sectional view of a metallic roller of a first modified example made to the rack and pinion steering gear shown in Fig. 1; and
Fig. 4 is an enlarged sectional view of a metallic roller of a second modified example made to the rack and pinion steering gear shown in Fig. 1.

### Description of Reference Numerals

- 10: rack and pinion steering gear
- 11: pinion
- 12: rack shaft
- 14: rack guide
- 16: metallic roller
- 32: elastic member

### Best Mode for Carrying out the Invention

Hereinafter, a preferred embodiment of the invention will be described in detail based on the drawings.

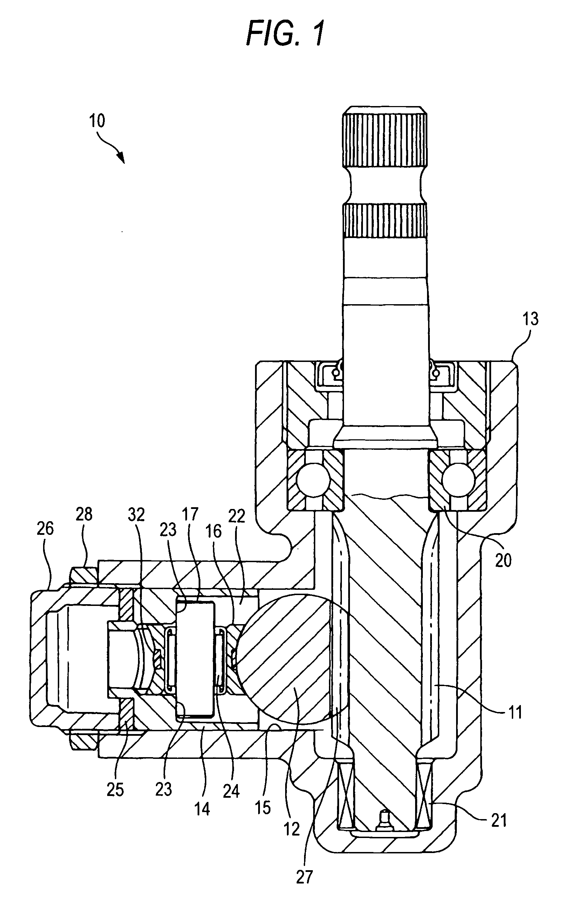

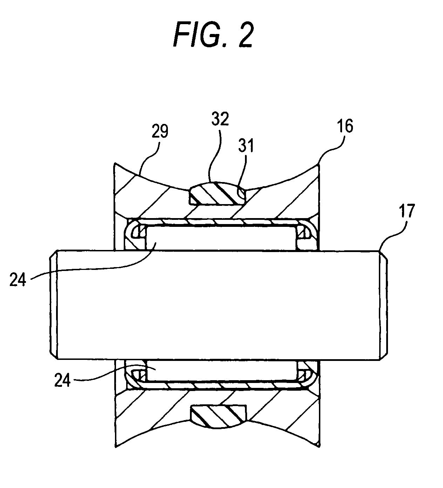

Fig. 1 is a sectional view showing an embodiment of a rack and pinion steering gear according to the invention, and Fig. 2 is an enlarged sectional view of a metallic roller in the rack and pinion steering gear shown in Fig. 1.

As is shown in Fig. 1, a rack and pinion steering gear 10 of an embodiment of the invention includes a pinion shaft 11 coupled to a steering shaft which rotates by virtue of manipulation of a steering wheel and a rack shaft 12 which meshes with the pinion 11. Both the pinion 11 and the rack shaft 12 are accommodated within a housing 13.

The pinion 11 is rotatably supported by bearings 20, 21 which are disposed in such a manner as to be spaced apart from each other in an axial direction of the pinion 11 and rotates together with the steering shaft. The rack shaft 12 is disposed in such a manner that an axial direction thereof intersects the axial direction of the pinion 11 and is supported in the housing 13 in such a manner as to reciprocate rectilinearly in the axial direction thereof. Both ends of the rack shaft 12 are connected to a link mechanism, not shown, for steering road wheels.

A substantially cylindrical rack guide 14 is disposed on an opposite side to the pinion 11 across the rack shaft 12. The rack guide 14 is accommodated in such a manner as to move forwards towards and rearwards away from the rack shaft 12 within a substantially cylindrical space (a rack guide accommodation space) 15 which is provided within the housing 13.

A roller accommodation space 22 is provided concavely at a distal end portion of the rack guide 14 which faces the rack shaft 12 side. A metallic roller 16 which rolls on a back side of the rack shaft 12 and a rotational shaft 17 thereof are accommodated within the roller accommodation space 22. The rotational shaft 17 is disposed in such a manner that an axial direction thereof is intersects at right angles a direction in which the rack shaft 12 moves rectilinearly and are fixedly supported on a shoulder portion 23 of the roller accommodation space 22 at both ends thereof. The metallic roller 16 is rotatably assembled to the rotational shaft 17 with a plurality of needle rollers 24 interposed between the rotational shaft 17 and itself.

A proximal end portion of the rack guide 14 is press stopped via a spring member by an adjustment screw 26 which is screwed into an opening in the rack guide accommodation space 15 in such a manner as to seal the opening. The elastic force of the spring member 25 is adjusted by adjusting a screwing amount of the adjustment screw 26. The rack guide 14, which receives the elastic force of the spring member 25, is adapted to be pushed towards the rack shaft 12 so as to bias the rack shaft 12 via the metallic roller 16 against the pinion 11. Note that a member which accumulates elastic repulsive force such as a coned disc spring can be used as the spring member 25. The adjustment screw 26 is positioned and fixed to the housing 13 by means of a locknut 28.

The rack shaft 12, the rack guide 14, the metallic roller 16 and the rotational shaft 17 of the metallic roller 16 are all made of metal such as a special steel including chrome steel.

Furthermore, referring to Fig. 2, an outer circumferential surface (rolling contact surface) 29 of the metallic roller 16 is formed in such a manner as to be brought into encompassing contact with the back side of the rack shaft 12 which is curved into an arc-like shape in cross section. In addition, a recessed groove 31 having a substantially rectangular cross section is provided at an axially central portion of the rolling contact surface 29 in such a manner as to extend over the full circumference thereof, and an elastic member 32 is fitted in this recessed groove 31. The elastic member 32 swells from the rolling contact surface 29 in such a state that the elastic member 32 is fitted in the recessed groove 31. In addition, the elastic member 32 is formed of a rubber or synthetic resin which has elasticity into an annular shape, and in the event that the elastic member 32 is formed of, for example, a rubber, the elastic member 32 is secured circumferentially to the recessed groove 31 by means of bonding, baking or combination thereof.

In the rack and pinion steering gear 10 that is configured as has been described above, the pinion shaft 11 is rotated as the steering wheel is manipulated, and the rotation of the pinion 11 is converted into a rectilinear motion of the rack shaft 12, whereby the road wheels are steered by virtue of the rectilinear motion of the rack shaft 12. As this occurs, a detachment force acts between faces of teeth of the pinion 11 and faces of teeth of the rack shaft 12 at a meshing portion 27 where the pinion 11 meshes with the rack shaft 12, whereby the rack shaft 12 tends to be detached from the pinion 11 to thereby generate a backlash. The rack shaft 12, however, is biased towards the pinion 11 by the rack guide 14 which receives the elastic force of the spring member 25, whereby the generation of backlash at the meshing portion 27 is prevented.

Here, while the detachment force acts on the rack guide 14 via the rack shaft 12, the rack guide 14 receives the elastic force of the spring member 25 to thereby be pushed towards the rack shaft 12, whereby the elastic member 32 which swells from the rolling contact surface 29 is elastically deformed at a contact portion between the metallic roller 16 and the rack shaft 12. The metallic roller 16 is brought into contact with the back side of the rack shaft 12 at a metallic portion of the rolling contact surface 29 and the elastic member 32 by virtue of the deformation of the elastic member 32.

While the road wheels are caused to oscillate laterally by irregularities on the surface of a road while the vehicle is running, whereby the rack shaft 12 is caused to vibrate minutely in the axial direction thereof, according to the rack and pinion steering gear 10 of the embodiment, since the elastic member 32 is disposed at the contact portion between the rack shaft 12 to which highest vibration energy is applied and the metallic roller 16 and the elastic member 32 swells from the outer circumferential surface (rolling contact surface) 29 of the metallic roller 16, the vibration energy of the rack shaft 12 can be absorbed by the elastic member 32, whereby the propagation of vibrations to the metallic roller 16 and parts lying on the periphery thereof, so as to reduce abnormal noise that would otherwise be generated by minute collisions at the meshing portion 27 between the pinion 11 and the rack shaft 12, the contact portion between the rack shaft 12 and the metallic roller 16 and the parts lying on the periphery of the metallic roller 16. As a result, a comfortable inside environment can be provided for the occupants of the vehicle including the driver.

In addition, when the pinion 11 rotates through manipulation of the steering wheel and the rack shaft 12 starts its rectilinear motion in its axial direction, the rack shaft 12 performs such a motion while pressing against the elastic member 32 on the metallic roller 16, and the steering effort is also used to press the elastic member 32. Therefore, in a steering manipulation range in which the steering wheel is manipulated through a minute steering angle as from, for example, a straight ahead running state, a relation between the manipulation of the steering wheel and the movement of the road wheels does not rise linearly from 0 (zero) but rises in a quadratic curve-like fashion, whereby the movement of the road wheels relative to the manipulation of the steering wheel does not become too drastic, so that a fatigue-less driving stability can be obtained.

Furthermore, the loads including the detachment force at the meshing portion 27 between the pinion 11 and the rack shaft 12 which are applied from the rack shaft 12 to the rack guide 14 can be borne by not only the elastic member 32 of the metallic roller 16 but also the metallic portion on the rolling contact surface 29 of the metallic roller 16, whereby an early creep of the elastic member 32 can be prevented, and the possibility of failure of the elastic member 32 can be reduced even when an excessive load is inputted. As a result, the aforesaid effect can be enjoyed over a long period of time.

### Advantage of the Invention

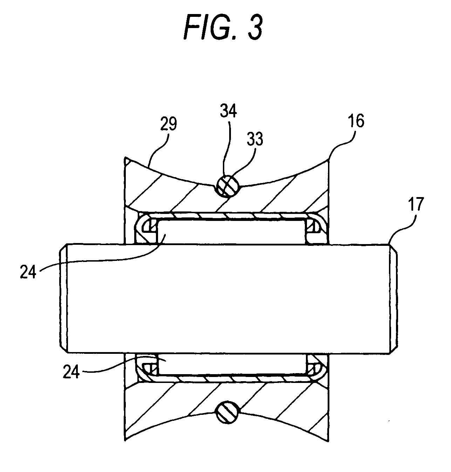

Next, referring to Fig. 3, a first modified example of the rack and pinion steering gear 10 will be described. Fig. 3 is an enlarged sectional view of a metallic roller of a first modified example.

As is shown in Fig. 3, in this modified example, a recessed groove 33 having a substantially semi-circular cross section is provided at an axially central portion of a metallic roller 16 in such a manner as to extend over the full circumference thereof, and an 0 ring 34 is fitted in this recessed groove 33. The 0 ring 34 swells from a rolling contact surface 29 in such a state that the O ring 34 is fitted in the recessed groove 33.

In this modified example, the existing O ring is applied to the elastic member, whereby the production costs of the rack and pinion steering gear can be reduced.

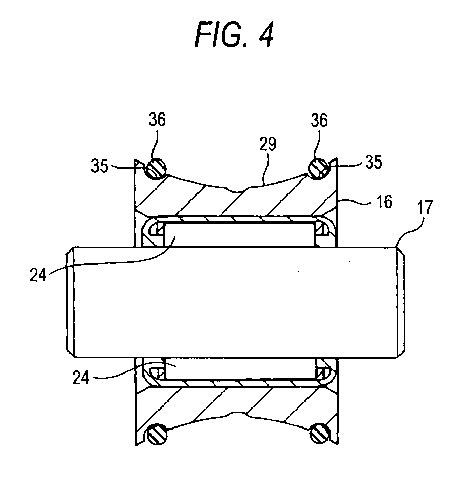

Next, referring to Fig. 4, a second modified example of the rack and pinion steering gear 10 will be described. Fig. 4 is an enlarged sectional view of a metallic roller in the second modified example.

As is shown in Fig. 4, in this modified example, recessed grooves 35, 35 each having a substantially semi-circular cross section are provided at axial end portions of a rolling contact surface 29 of a metallic roller 16 in such a manner as to be substantially symmetrical with each other in the axial direction while extending over the full circumference of the rolling contact surface 29, and an 0 ring 36 is fitted in each recessed groove 35. Each 0 ring 36 swells from the rolling contact surface 29 in such a state that the 0 ring 36 is fitted in the recessed groove 35.

In this modified example, the contact area between the elastic members 32 and the rack 12 can be increased so as to absorb more of the vibration energy of the rack shaft 12. In particular, in the event that the meshing portion 27 between the pinion 11 and the rack shaft 12 is inclined relative to the axial direction of the rack shaft 12, while detachment force is generated in an inclined direction relative to the axial direction of the rack shaft 12 between the faces of the teeth of the pinion 11 and the faces of the teeth of the rack shaft 12 in accordance with the degree at which the meshing portion 27 is inclined, since the elastic members 32 are disposed on the rolling contact surface 29 substantially symmetrical with each other relative to the axially central portion of the metallic roller 16, vibration energy due to the detachment force can be absorbed with good efficiency.

Note that the invention is not limited to the embodiment and hence can be modified and improved properly.

This patent application is based on the Japanese Patent Application (No. 2005-107732) filed on April 4, 2005, and the contents thereof are incorporated herein by reference.

## Claims

1. A rack and pinion steering gear comprising:
a pinion shaft coupled to a steering shaft;
a rack shaft which meshes with the pinion; and
a rack guide provided with a metallic roller which is adapted to roll on a back side of the rack shaft and the rack guide supporting the rack shaft via the metallic roller, wherein
the metallic roller has an elastic member which is partially secured to a rolling contact surface thereof in a circumferential direction, and
the metallic roller contacts with the back side of the rack shaft at both of a metallic portion of the rolling contact surface and the elastic member.

2. The rack and pinion steering gear as set forth in Claim 1, wherein the elastic member swells from the rolling surface of the metallic roller.

3. The rack and pinion steering gear as set forth in Claim 1 or 2, wherein the elastic member is disposed substantially symmetrically relative to an axially central portion of the metallic roller.
